# EUROPÄISCHE PATENTSCHRIFT

(11) **EP 3 020 489 B1**
(45) Veröffentlichungstag und Bekanntmachung des Hinweises auf die Patenterteilung: **29.05.2019**
(21) Anmeldenummer: 15191510.5
(22) Anmeldetag: 26.10.2015
(51) Int. Cl.: B21C 47/24, B21D 39/03

(54) **VERFAHREN UND BANDBEHANDLUNGSANLAGE ZUM VERBINDEN VON METALLBÄNDERN**
METHOD AND WEB PROCESSING INSTALLATION FOR CONNECTING METAL WEBS
PROCÉDÉ ET INSTALLATION POUR LE RACCORDEMENT DE BANDES MÉTALLIQUES

(30) Priorität: 14.11.2014 DE 102014116710
(43) Veröffentlichungstag der Anmeldung: 18.05.2016
(73) Patentinhaber: BWG BERGWERK- UND WALZWERK-MASCHINENBAU GMBH, 47051 Duisburg (DE)
(72) Erfinder: Noé, Andreas, 47647 Kerken (DE); Hoffmann, Jens, Dr., 45149 Essen (DE); Ambaum, Friedhelm, 46509 Xanten (DE)
(74) Vertreter: von dem Borne, Andreas

(56) Entgegenhaltungen:
- WO-A1-2014/033037
- DE-A1- 3 916 014
- DE-C1- 10 208 304
- US-A1- 2007 084 045

## Beschreibung

Die Erfindung betrifft ein Verfahren zum Verbinden eines Bandendes eines ersten Metallbandes mit dem Bandanfang eines zweiten Metallbandes, in Bandbehandlungsanlagen, wobei das Bandende und der Bandanfang unter Bildung einer Überlappung übereinander positioniert und im Bereich der Überlappung an mehreren Verbindungspunkten mittels Durchsetzfügen ohne Durchtrennung und folglich ohne Schneidanteil miteinander verbunden werden. Gegenstand der Erfindung ist auch eine Bandbehandlungsanlage mit einer Vorrichtung zum Verbinden eines Bandendes eines ersten Metallbandes mit dem Bandanfang eines zweiten Metallbandes.

In Bandbehandlungsanlagen, welche auch als Bandprozesslinien bezeichnet werden, werden in der Regel zu Bunden (Coils) aufgewickelte Bänder im Einlaufteil abgewickelt, durchlaufen dann eine oder mehrere Behandlungsstationen und werden im Auslaufteil gegebenenfalls wieder aufgewickelt oder alternativ auch zu Tafeln geschnitten. Damit die Bänder nicht stets neu eingefädelt werden müssen, wird der Bandanfang eines neuen Bundes mit dem Bandende des letzten Bundes verbunden. Der Bandverbindung kommt besondere Bedeutung zu, da mangelhaften Bandverbindungen negative Auswirkungen auf die weitere Bearbeitung haben können.

Aus der Praxis sind daher verschiedenste Verfahren zur Bandverbindung, z. B. durch Schweißen, Stanzen und/oder Kleben bekannt (vgl. z. B. EP 2 202 025 A1 und EP 1 749 590 A2).

In der Praxis hat sich herausgestellt, dass sich Bandverbindungen alternativ zu den herkömmlichen Verfahren auch im Wege des Durchsetzfügens erzeugen lassen, das auch als Clinchen bezeichnet wird. Das Durchsetzfügen ist ein Verfahren zum Verbinden von Metallbändern bzw. Blechen ohne die Verwendung eines Zusatzwerkstoffes. Ein Durchsetzfügewerkzeug besteht in der Regel aus Stempel(n) und Matrize(n). Die zu verbindenden Bänder werden durch den Stempel ähnlich wie beim Tiefziehen unter plastischer Deformation in bzw. gegen die Matrize gedrückt. Die Bänder werden dabei ohne den Einsatz von Nieten formschlüssig (und kraftschlüssig) miteinander verbunden. Durch Ausgestaltung von Matrize und Stempel kommt es an bzw. in der Matrize zu einem Fließen der Werkstoffe in die Breite, so dass - ähnlich einer Nietverbindung - eine formschlüssige Verbindung realisiert wird, ohne dass jedoch separate Nieten verwendet werden. Durchsetzfügen bzw. Clinchen meint im Rahmen der Erfindung ein Durchsetzfügen ohne Durchtrennung und folglich ohne Schneidanteil.

Ein derartiges Verfahren und eine derartige Bandbehandlungsanlage der eingangs beschriebenen Art sind z. B. aus der WO 2014/033037 A1 bekannt, wobei diese Druckschrift die Basis für den Oberbegriff der Ansprüche 1 und 7 bildet. Dabei werden die Verbindungspunkte im Zuge der Bandverbindung mittels Durchsetzfügen erzeugt, wobei quer zur Bandlaufrichtung beabstandet eine Vielzahl von Verbindungspunkten unter Bildung einer oder mehrerer Verbindungspunktereihen erzeugt werden. Dabei ist es vorteilhaft, wenn das Werkzeug oder die Werkzeuge positionsgeregelt angestellt wird/ werden.

Das bekannte Verfahren zum Verbinden von Bändern mittels Durchsetzfügen ohne Durchtrennung hat sich in der Praxis bewährt, es ist jedoch weiterentwicklungsfähig. - Hier setzt die Erfindung ein.

Der Erfindung liegt die Aufgabe zugrunde, ein Verfahren zu schaffen, mit dem sich Metallbänder universell und mit hoher Qualität auf einfache Weise verbinden lassen.

Zur Lösung dieser Aufgabe lehrt die Erfindung bei einem gattungsgemäßen Verfahren, dass die Dicke des Bandendes des ersten Metallbandes und/oder die Dicke des Bandanfangs des zweiten Metallbandes vor dem Verbinden gemessen werden und dass der Durchsetz-Fügeprozess in Abhängigkeit von der/ den gemessenen Dicken gesteuert oder geregelt wird. Das Durchsetzfügen erfolgt mit einem Durchsetz-Fügewerkzeug, das Stempel und Matrizen aufweist. Erfindungsgemäß wird nun die Eintauchtiefe des Stempels bzw. der Stempel in das Material in Abhängigkeit von der gemessenen Dicke des Bandes bzw. von dem gemessenen Dicken der Bänder gesteuert oder geregelt, z. B. positionsgeregelt. Die Erfindung geht dabei von der Erkenntnis aus, dass es für die Qualität der Bandverbindung besonders wichtig ist, dass eine Verbindung ohne Durchtrennung und folglich ohne Schneidkanten erzeugt wird. Das setzt voraus, dass der Stempel nicht übermäßig tief in das Material eintaucht. Andererseits ist zur Erzeugung einer einwandfreien und festen Verbindung wesentlich, dass der Stempel in ausreichendem Maße in das Material eintaucht, so dass im Ergebnis der Eintauchtiefe des Stempels in die Bänder besondere Bedeutung zukommt. Aus diesem Grunde ist es grundsätzlich möglich, den Fügeprozess positionsgeregelt durchzuführen. Erfindungsgemäß erfolgt jedoch zusätzlich zu einer Positionsregelung oder alternativ zu einer Positionsregelung eine Steuerung oder Regelung des Fügeprozesses in Abhängigkeit von den tatsächlichen Dicken der Metallbänder. Denn in der Praxis hat sich herausgestellt, dass die zu verbindenden Bänder in ihren Dicken von den angegebenen/angenommenen Werten bzw. von den Sollwerten abweichen. Da nun erfindungsgemäß eine Ermittlung der Ist-Dicke der Metallbänder erfolgt, kann im Zuge des Fügeprozesses sichergestellt werden, dass der Fügeprozess stets mit optimaler Eintauchtiefe durchgeführt wird. Besonders bevorzugt werden dabei sowohl die Dicke des Bandendes des ersten Bandes als auch die Dicke des Bandanfangs des zweiten Bandes gemessen. Die Dickenmessung bzw. die Dickenmessungen können z. B. durch Laserdickenmessungen erfolgen.

Da erfindungsgemäß eine Dickenmessung erfolgt, ist es auch nicht mehr erforderlich, Bandenden bzw. Bandanfänge mit eventuell größeren Dickenabweichungen, z. B. Überdicken vorab abzuschneiden, sondern die Bandverbindung kann in solchen Bereichen erzeugt werden, die später gegebenenfalls ohnehin als Schrott abgeschnitten werden.

Die Messung der Banddicke bzw. Banddicken erfolgt vor dem Fügen, und zwar bevorzugt separat für jedes der beiden Bänder. Alternativ liegt es auch im Rahmen der Erfindung, die Gesamtdicke der übereinander positionierten Bänder (vor dem Fügeprozess) zu messen. Es ist möglich, die Dicke oder die Dicken in der Nähe oder in/an der Fügevorrichtung zu messen. Alternativ kann die Messung jedoch an einem anderen Ort, z. B. unmittelbar hinter dem Abwickelhaspel erfolgen.

Weitere vorteilhafte Ausgestaltungen werden im Folgenden erläutert.

Es ist vorteilhaft, wenn der Bandanfang und das Bandende und/oder das Durchsetzfügewerkzeug derart positioniert werden, dass kein Stempel des Fügewerkzeuges eine der Bandkanten trifft und/oder dass vor oder nach dem Verbinden der Bänder im Bereich einer oder beider Bandkanten eine oder mehrere Seitenstanzungen eingebracht werden.

Dabei geht die Erfindung von der Erkenntnis aus, dass zur Vermeidung von Problemen im Zuge des Durchlaufens der Bänder durch andere Komponenten der Anlage einwandfreie Clinchpunkte erzeugt werden müssen und dass vermieden werden muss, dass ein Clinchpunkt im Bereich einer Bandkante erzeugt wird bzw. vorhanden ist. Denn wenn z. B. ein Clinchpunkt im Bereich einer bestehenden Bandkante erzeugt wird, kann es bei einem solchen unsauberen Clinchpunkt je nach Grad der Abdeckung der Bandkante durch den Stempel zu Ausfransungen an der Bandkante kommen. In diesem Bereich können später beim Durchlaufen durch die Bandbehandlungslinie Partikel abbrechen, die z. B. an Rollen anhaften und zum Abdrücken auf dem Band führen. Erfindungsgemäß werden folglich Vorkehrungen getroffen, um zu vermeiden, dass ein Clinchpunkt im Bereich einer Bandkante entsteht oder bestehen bleibt.

Es besteht daher erfindungsgemäß die Möglichkeit, dass bereits im Zuge der Positionierung von Bandanfang und/oder Bandende und/oder der Positionierung des Werkzeuges gewährleistet wird, dass kein Stempel des Fügewerkzeuges eine der Bandkanten trifft.

Alternativ oder ergänzend schlägt die Erfindung vor, dass im Bereich einer oder beider Bandkanten eine oder mehrere Seitenstanzungen bzw. Ausstanzungen eingebracht werden. Das Ausstanzen von Metallbändern ist in der Praxis grundsätzlich bekannt. So kann es z. B. zweckmäßig sein, Seitenstanzungen bei der Bandverbindung von Bändern ungleicher Breite vorzunehmen, z. B. dann, wenn das neue Band breiter ist als das alte, denn die breiteren Ecken des neuen Bandes könnten in der Linie hängen bleiben, z. B. an Abquetschrollen. Um dies zu vermeiden, werden in diesem Fall die Ecken schräg weggestanzt, und zwar mit einem trapezförmigen oder halbkreisförmigen Stanzwerkzeug. Es besteht nun erfindungsgemäß die Möglichkeit, die Seitenstanzungen nach dem Verbinden der Bänder einzubringen, und zwar mit der Maßgabe, dass kein Fügepunkt durch die Stanzung angeschnitten wird.

Alternativ besteht die Möglichkeit, bereits vor dem Verbinden der Bänder eine oder mehrere Seitenstanzungen einzubringen. Dieses ist z. B. dann zweckmäßig, wenn die Gefahr besteht, dass ein Clinchstempel auf die Bandkante trifft. In diesem Fall kann die Seitenstanzung vordem Verbinden der Bänder mit der Maßgabe eingebracht werden, dass eine Abhängigkeit von der Werkzeuggeometrie und der Bandbreite ein Auftreffen eines Werkzeugstempels auf eine Bandkante verhindert wird.

Abgesehen von der oben bereits erwähnten Möglichkeit, das Bandende und Bandanfang auf Anlagenmitte zentriert werden, besteht die Möglichkeit, dass nur eines der Bänder mittig zum anderen zentriert wird. Dann können beide Bandenden bzw. beide Bänder außerhalb der Anlagenmitte liegen. Das Clinchwerkzeug wird dann so in Breitenrichtung verschoben, dass seine Mittenachse mit der der Bandenden übereinstimmt. Es gibt dann wieder die oben erläuterten Möglichkeiten, um zu vermeiden, dass ein Clinchpunkt im Bereich der Bandkante liegt.

Optional besteht die Möglichkeit, dass das Clinchwerkzeug fix in der Anlagenmitte angeordnet bleibt. Die Lage der beiden Bänder wird relativ zur Anlagenmitte gemessen. Auf diese Weise ist dann bekannt, wo die Clinchpunkte in den beiden verbundenen Bandenden angeordnet sind. Die Seitenstanzung erfolgt nun je Seite so, dass kein Clinchpunkt angestanzt wird. In dem Fall, in dem in der Linie auch besäumt wird, wird die Stanztiefe je Seite entsprechend größer bemessen, jedoch wiederum so, dass kein Clinchpunkt angestanzt wird.

Nach einem weiteren Aspekt der Erfindung, wird optional vorgeschlagen, dass die Bänder vor und/oder während des Clinchens beölt werden. Das Beölen der Fügepartner im Zuge des Clinchens ist grundsätzlich bekannt, um den Werkzeugverschleiß beim Clinchen zu minimieren und die Standzeit zu maximieren. In der Praxis hat sich jedoch herausgestellt, dass die Beölung für den Tiefziehprozess beim Clinchen ungünstig ist. Dieses hängt damit zusammen, dass die Beölung die Reibung der Fügepartner bzw. Bänder verringert und dieses kann sich negativ auf die Verbindungsqualität bzw. Verbindungsfestigkeit auswirken.

Davon ausgehend schlägt die Erfindung nun bevorzugt vor, dass lediglich die obere Oberfläche des oben liegenden Metallbandes und die untere Oberfläche des unten liegenden Metallbandes beölt werden. Demnach erfolgt die Beölung folglich ausschließlich von unten auf das unten liegende Band und von oben auf das oben liegende Band, so dass zwischen den beiden Bandendenoberflächen keine Beölung stattfindet. Damit lassen sich die in der Praxis beobachteten Probleme auf einfache und zuverlässige Weise vermeiden. Dennoch kann der Werkzeugverschleiß minimiert und die Standzeit maximiert werden.

Das erfindungsgemäße Verfahren eignet sich für verschiedenste Metallbänder, z. B. Bänder aus Aluminium bzw. einer Aluminiumlegierung oder Kupfer bzw. einer Kupferlegierung. Dabei werden grundsätzlich übliche Bänder, z. B. geglühte Metallbänder umfasst. Es liegt jedoch ebenso im Rahmen der Erfindung, dass nicht geglühte Metallbänder miteinander verbunden werden.

Für das Clinchen ist es erforderlich bzw. zweckmäßig, wenn die Fügepartner eine gute Duktilität bzw. ein gutes Umformvermögen unter Druck- und Zugbeanspruchung aufweisen. In der Praxis ist man daher bislang davon ausgegangen, dass lediglich Bleche bzw. Bänder mit hoher Bruchdehnung geeignet sind. Aus diesem Grunde wurde das Clinchen beim Verbinden von Aluminiumbändern bislang auf geglühte Aluminiumbänder beschränkt und die Erfindung umfasst selbstverständlich die Verbindung geglühter Metallbänder. Versuche haben nun aber überraschend gezeigt, dass sich auch kaltgewalzte, nicht geglühte Metallbänder, z. B. Aluminiumbänder mit ausreichender Qualität durch Clinchen verbinden lassen. Versuche haben gezeigt, dass das Clinchen mit guter Qualität selbst dann realisiert werden kann, wenn die Bruchdehnung A₈₀ nur 6 % oder weniger beträgt. Bei der Bruchdehnung handelt es sich beim Zugversuch um die Differenz zwischen der Messlänge nach dem Bruch und der Anfangsmesslänge, bezogen auf die Anfangsmesslänge, wobei die Bruchdehnung in Prozent angegeben wird. Da der Wert der Bruchdehnung durch das Verhältnis von Messlänge zu Probenquerschnitt mitbestimmt wird, wird die Bruchdehnung durch einen entsprechenden Index näher gekennzeichnet, wobei im vorliegenden Fall die Bruchdehnung A₈₀ auf einen Zugversuch bei einer Messlänge von 80 mm der Probe bezogen ist. So können Metallbänder verwendet werden, deren Bruchdehnung A₈₀ 2 % bis 5 %, z. B. etwa 3 % bis 4 % beträgt. Erfindungsgemäß gelingt folglich eine einwandfreie Bandverbindung nicht nur bei geglühten Metallbändern, sondern auch bei kaltgewalzten, nicht geglühten Metallbändern. Bei den Metallbändern kann es sich z. B. um Bänder aus Aluminium bzw. einer Aluminiumlegierung oder Kupfer oder einer Kupferlegierung handeln. Von besonderer Bedeutung ist dabei die Tatsache, dass die Bandverbindung durch eine Vielzahl von Verbindungspunkten realisiert wird. Vorzugsweise werden zumindest 30 Verbindungspunkte pro Meter Bandbreite für die jeweilige Bandverbindung realisiert, z. B. zumindest 40 Verbindungspunkte, besonders bevorzugt zumindest 50 Verbindungspunkte pro Meter Bandbreite. Aufgrund der Vielzahl der Verbindungspunkte, die die Bandverbindung erzeugen, kann es in Kauf genommen werden, dass einzelne Clinchpunkte einreißen. Die Erfindung geht dabei von der Erkenntnis aus, dass z. B. bei der Verbindung von nicht geglühten, kaltgewalzten Metallbändern in einem Grenzbereich gearbeitet werden kann, in dem gegebenenfalls einzelne Clinchpunkte einreißen. Die Haltbarkeit der Bandverbindung wird aufgrund der Vielzahl von Clinchpunkten jedoch nicht entscheidend beeinträchtigt, so dass sich das erfindungsgemäße Verfahren in der Praxis auch bei nicht geglühten, kaltgewalzten Metallbändern realisieren lässt. Dabei können die Vielzahl der Verbindungspunkte in einer Verbindungspunktreihe mit einer Vielzahl von über die Bandbreite verteilten Verbindungspunkten oder besonders bevorzugt auch in mehreren in Bandlaufrichtung hintereinander angeordneten Verbindungspunktreihen erzeugt werden. Dabei können eine oder mehrere Verbindungspunktreihen zeitgleich mit lediglich einem einzigen Pressenhub erzeugt werden.

Insoweit kann auf die Erkenntnisse aus der WO 2014/033037 A1 zurückgegriffen werden.

In einer optionalen Ausgestaltung der Erfindung werden die Bänder durch temperiertes Clinchen miteinander verbunden. Dann ist vorgesehen, dass die zu verbindenden Metallbänder vor und/oder während des Verbindens erwärmt werden. Dazu besteht die Möglichkeit, die Bänder selbst mit geeigneten Temperiervorrichtungen vorzuwärmen und dann zu clinchen. Alternativ oder ergänzend kann die Temperierung auch über die Clinchwerkzeuge selbst erfolgen. Dazu besteht die Möglichkeit, Oberwerkzeug und/oder Unterwerkzeug zu erwärmen, so dass das Band dann unter Kontaktdruck erwärmt wird und danach umgeformt wird. Dazu kann es zweckmäßig sein, mit einer nicht konturierten Matrize bzw. einem nicht konturierten Gegenwerkzeug zu arbeiten, wobei Gegenwerkzeug und/oder Stempel beheizbar sind. Bei einer Erwärmung der Bänder über eines oder beide Werkzeuge, kann es zweckmäßig sein, die Bänder vor dem Clinchen bzw. Pressen mit geeigneten Mitteln, z. B. einer Klemmeinrichtung oder dergleichen gegeneinander zu drücken. So besteht die Möglichkeit, die Bänder mit einem Niederhalter gegen die (beheizte) Gegenfläche zu drücken, so dass es zur Erwärmung des Verbindungsbereiches kommt. Anschließend erfolgt dann das Clinchen mit Hilfe des Stempels. Ein Kontaktdruck während des Heizens kann aber auch mit den Werkzeugen bzw. Stempeln selbst erfolgen. In der (ersten) Heizphase erfolgt dann lediglich eine Fixierung der Bänder und dabei das Erwärmen und in einer (zweiten) Clinchphase dann das verbinden.

Beim temperierten Clinchen ist es zweckmäßig, wenn das bewegliche Werkzeug, z. B. das Oberwerkzeug positionsgeregelt anstellbar ist, und zwar insbesondere dann, wenn der Stempel in einer Heizphase für die Kontaktvorwärmung auf dem Band positioniert werden muss. Im Falle einer Kontaktvorwärmung mit Hilfe des Werkzeuges ist es außerdem zweckmäßig, wenn der Kontaktdruck (während des Heizens) bandabhängig einstellbar ist.

Durch das Temperieren (Erwärmen) der Metallbänder wird deren Umformbarkeit bzw. deren Umformvermögen erhöht, so dass der Verbindungsprozess optimiert werden kann. Dieses ist insbesondere bei der Verbindung spröder Materialien vorteilhaft, da sich die Umformbarkeit spröder Materialien durch Temperierung verbessern lässt. Insgesamt kann das Temperieren bei bestimmten Werkstoffen oder Werkstoffkombinationen vorteilhaft sein. Rissbildungen können vermieden werden.

Gegenstand der Erfindung ist auch eine Bandbehandlungsanlage mit einer Vorrichtung zum Verbinden von Metallbändern mit einem Verfahren der beschriebenen Art. Diese Vorrichtung weist eine Verbindungspresse mit Pressengestell, Pressenoberteil und Pressenunterteil auf, wobei am Pressenoberteil ein Oberwerkzeug mit zumindest einem Stempel (oder einer Matrize) für das Durchsetzfügen und am Pressenunterteil ein Unterwerkzeug mit zumindest einer Matrize (oder einem Stempel) für das Durchsetzfügen befestigt sind, wobei Pressenoberteil und/oder Pressenunterteil zum Aufbringen einer Presskraft mit einem oder mehreren Antrieben (gegeneinander) verfahrbar sind. So besteht die Möglichkeit, das Pressenoberteil mit dem Oberwerkzeug mit Hilfe von Antrieben gegen das feststehende Unterwerkzeug zu verfahren oder umgekehrt. Bei den Antrieben kann es sich z. B. um hydraulische Presszylinder handeln. Dabei kann insbesondere auch auf bestehende Konstruktionen von Stanzverbindungspressen zurückgegriffen werden. Es können hohe Presskräfte aufgebracht werden, so dass nicht nur einzelne Verbindungspunkte, sondern zeitgleich eine Vielzahl von Verbindungspunkten gesetzt werden können, insbesondere eine oder mehrere vollständige Verbindungspunktreihen. So ist vorgesehen, dass das Oberwerkzeug als Mehrfachwerkzeug mit mehreren über die Bandbreite verteilten Stempeln (oder Matrizen) und das Unterwerkzeug als Mehrfachwerkzeug mit mehreren über die Bandbreite verteilten Matrizen (oder Stempeln) ausgebildet ist. Erfindungsgemäß sind eine oder mehrere Dickenmessvorrichtungen vorgesehen, mit denen die Dicke des Bandendes des ersten Metallbandes und/oder die Dicke des Bandanfangs des zweiten Metallbandes messbar ist bzw. messbar sind. Eine Steuer- oder Regelvorrichtung ist vorgesehen, mit welcher der Durchsetz-Fügeprozess in Abhängigkeit von den gemessenen Dicken steuerbar oder regelbar ist. Ergänzend kann eine Stanzvorrichtung vorgesehen sein, mit der eine oder mehrere Seitenstanzungen vor und/oder nach dem Verbinden der Bänder erzeugbar sind. Optional oder ergänzend können außerdem eine oder mehrere Beölungsvorrichtungen für die Bänder und/oder für die Werkzeuge vorgesehen sein.

Unter Berücksichtigung der Tatsache, dass sich die Vorrichtung optional an unterschiedliche Bänder und insbesondere unterschiedliche Banddicken anpassen lassen soll, ist bevorzugt eine Werkzeugwechselvorrichtung mit mehreren Oberwerkzeugen und mehreren Unterwerkzeugen (und folglich mehreren Werkzeugsätzen) vorgesehen, welche wahlweise aus einer Arbeitsposition innerhalb der Presse in eine Warteposition außerhalb der Presse überführbar sind und umgekehrt. Mit Hilfe der Werkzeugwechselvorrichtung besteht die Möglichkeit, mehrere Clinchwerkzeuge bzw. Werkzeugsätze zur Verfügung zu stellen, so dass eine einfache Anpassung der Maschine an die jeweiligen Gegebenheiten, insbesondere an unterschiedliche Banddicken erfolgen kann. Ergänzend besteht die Möglichkeit, die Werkzeugwechselvorrichtung mit einem zusätzlichen (herkömmlichen) Stanzwerkzeug auszurüsten, so dass sich die Maschine im Bedarfsfall auch in eine Stanzvorrichtung umrüsten lässt.

Wie bereits erläutert, weisen die Werkzeuge für das Clinchen in der Regel Stempel einerseits und Matrize andererseits auf. Bei der Matrize kann es sich z. B. um eine konturierte bzw. profilierte Matrize handeln, die an die Stempelform angepasst sein kann. Matrize meint im Rahmen die Erfindung aber auch eine nicht konturierte, flache Matrize und folglich ein flaches Gegenwerkzeug, so dass auch gleichsam "matrizenlose" Clinchverfahren umfasst werden.

Im Folgenden wird die Erfindung anhand von Zeichnungen erläutert, welche lediglich Ausführungsbeispiele darstellen. Es zeigen:
- Fig. 1: eine erste Ausführungsform in einem Vertikalschnitt,
- Fig. 2: eine vereinfachte Ansicht auf den Gegenstand nach Fig. 1 in Richtung X,
- Fig. 3: eine zweite Ausführungsform in einem Vertikalschnitt,
- Fig. 4: den Gegenstand nach Fig. 3 in einer Seitenansicht,
- Fig. 5: eine vereinfachte Ansicht auf den Gegenstand nach Fig. 4 in Richtung Y,
- Fig. 6: eine vereinfachte Darstellung der Clinchverbindung mit Banddickenmessung.

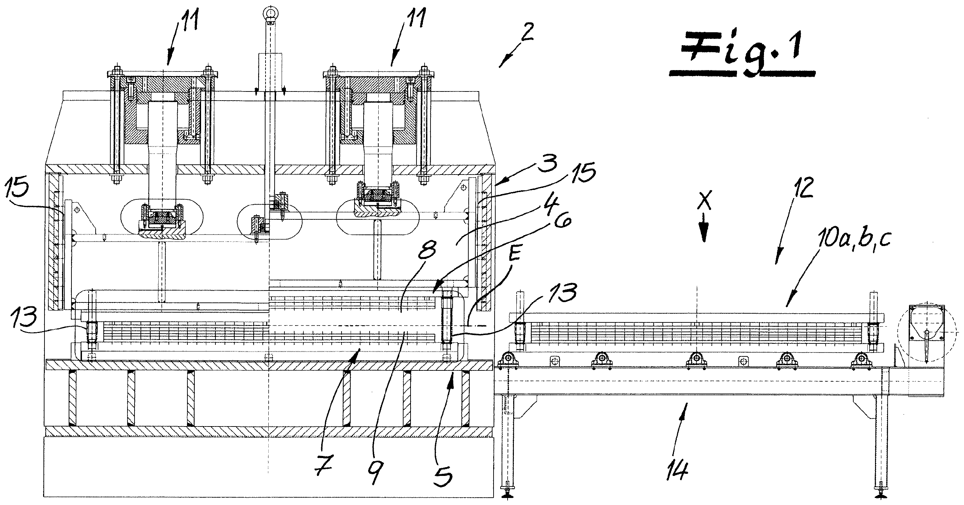

Die Figuren zeigen eine Vorrichtung zum Verbinden von Metallbändern, nämlich zum Verbinden eines Bandendes eines ersten Metallbandes mit dem Bandanfang eines zweiten Metallbandes. Eine solche Vorrichtung wird vorzugsweise in eine Bandbehandlungsanlage (Bandprozesslinie) integriert, z. B. in den Einlaufbereich einer solchen Bandprozesslinie. Dort werden aufgewickelte Metallbänder im Einlaufteil abgewickelt, durchlaufen dann verschiedene Behandlungsstationen und werden im Auslaufteil wieder aufgewickelt oder in sonstiger Weise weiterverarbeitet. Damit die Metallbänder nicht stets neu eingefädelt werden müssen, wird der Bandanfang eines neuen Bundes mit dem Bandende des letzten Bundes verbunden. Dazu werden Bandanfang und Bandende unter Bildung einer Überlappung übereinander positioniert und im Bereich der Überlappung an mehreren Verbindungspunkten miteinander verbunden. Solche Verbindungsverfahren sind grundsätzlich bekannt. Die Metallbänder sind in den Fig. 1 bis 5 nicht dargestellt, lediglich die Bandebene E ist angedeutet.

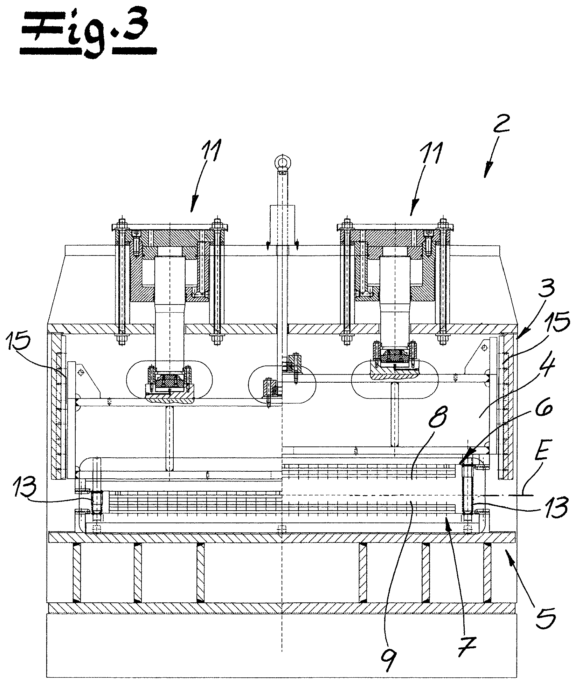

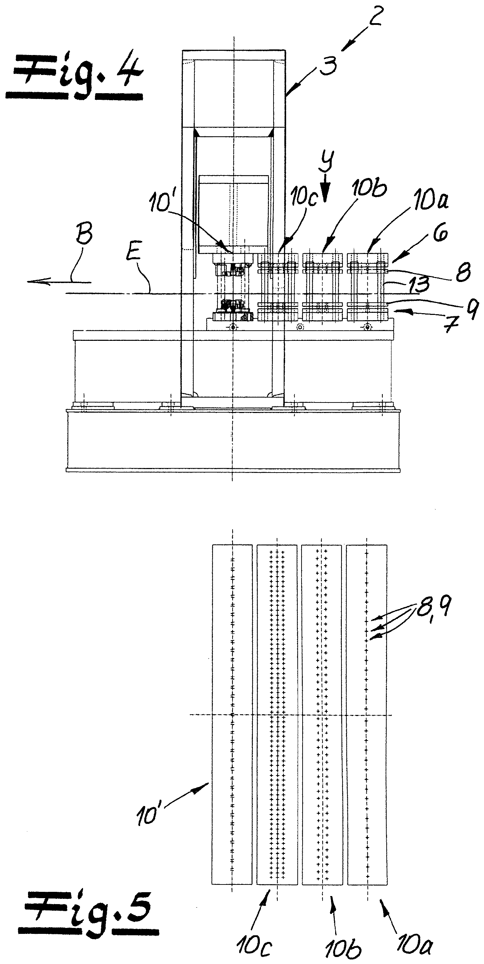

Erfindungsgemäß werden die Verbindungspunkte mittels Durchsetzfügen ohne Schneidanteil (Clinchen) erzeugt. Dazu weist die Vorrichtung eine Verbindungspresse 2 mit Pressengestell 3, Pressenoberteil 4 und Pressenunterteil 5 auf. Die Bandlaufrichtung B ist in Fig. 4 angedeutet, in Fig. 1 und 3 steht sie senkrecht zur Zeichenebene. An dem Pressenoberteil 4 ist ein Oberwerkzeug 6 mit mehreren Stempeln 8 für das Clinchen befestigt. Am Pressenunterteil 5 ist ein Unterwerkzeug 7 mit mehreren Matrizen für das Clinchen befestigt. Oberwerkzeug 6 mit Stempeln 8 und Unterwerkzeug 7 mit Matrizen 9 bilden einen Werkzeugsatz 10a, b, c. Oberwerkzeug 6 und Unterwerkzeug 7 sind jeweils als Mehrfachwerkzeuge mit jeweils mehreren über die Bandbreite verteilten Stempel 8 und Matrizen 9 ausgebildet. In den dargestellten Ausführungsbeispielen ist das Pressenoberteil 4 zum Aufbringen der Presskraft mit den Antrieben 11 gegen das fest stehende Pressenunterteil 5 verfahrbar. Die Antriebe 11 sind in den Ausführungsbeispielen als hydraulische Presszylinder 11 ausgebildet, welche mit ihren Kolben an das verfahrbare Pressenoberteil 4 angeschlossen sind und sich an dem festen Oberholm des Pressengestells 3 abstützen. Die Fig. 1 und 3 zeigen die Presse 2 in geteilter Darstellung jeweils in einer Hälfte geschlossen und in der anderen Hälfte geöffnet. Das Pressenoberteil 4 ist am Pressengestell 3 an Führungen 15 geführt.

Die dargestellten Ausführungsformen sind jeweils mit einer Werkzeugwechselvorrichtung 12 ausgerüstet, welche mehrere Werkzeugsätze 10a, b, c, jeweils bestehend aus Oberwerkzeug 6 und Unterwerkzeug 7, zur Verfügung stellen. Mit Hilfe dieser Werkzeugwechselvorrichtung 12 lassen sich die einzelnen Werkzeugsätze 10a, b, c wahlweise aus einer Arbeitsposition innerhalb der Presse in eine Warteposition außerhalb der Presse überführen und umgekehrt. Auf diese Weise besteht die Möglichkeit, die Werkzeuge auszutauschen und die Vorrichtung an die gewünschten Gegebenheiten, z. B. an die jeweilige Banddicke anzupassen. Denn bevorzugt werden für das Verbinden bestimmter Banddicken unterschiedliche Werkzeuge eingesetzt.

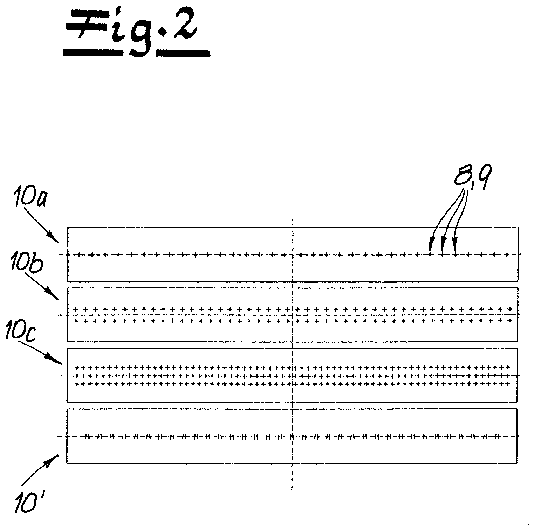

Die Fig. 1 und 2 einerseits und die Fig. 3 bis 5 andererseits zeigen zwei Ausführungsformen mit unterschiedlich ausgestalteten Werkzeugwechselvorrichtungen 12.

In den Fig. 1 und 2 ist eine erste Ausführungsform dargestellt, bei welcher die Werkzeuge 6, 7 mit der Werkzeugwechselvorrichtung 12 quer zur Bandlaufrichtung B aus der Arbeitsposition in die Warteposition überführt werden. Dazu ist die Werkzeugwechselvorrichtung 12 bei dieser Ausführungsform seitlich neben der Presse 2 angeordnet. Sie weist einen Wechseltisch 14 mit mehreren entlang der Bandlaufrichtung B hintereinander angeordneten Werkzeugsätzen 10a, b, c auf. Soll das sich in der Verbindungspresse 2 befindliche Werkzeug ausgetauscht werden, so wird es quer zur Bandlaufrichtung B aus der Presse heraus auf den Wechseltisch 14 gezogen (oder geschoben). Der Wechseltisch 14 verfährt dann parallel zur Bandlaufrichtung, z. B. um eine Position, sodass dann ein anderes Werkzeug quer zur Bandlaufrichtung B in die Presse 2 hineingeschoben (oder hineingezogen) werden kann. In der vereinfachten Draufsicht in Fig. 2 ist erkennbar, dass bei der dargestellten Ausführungsform in der Werkzeugwechselvorrichtung 12 vier verschiedene Werkzeuge bzw. Werkzeugsätze 10a, b, c, 10' angeordnet sind. Es sind drei Werkzeugsätze 10a, b, c für das Clinchen vorgesehen, mit denen eine, zwei oder drei Verbindungspunktreihen gesetzt werden können. Das erste Werkzeug 10a weist folglich eine Reihe von Stempeln und Matrizen auf, während der zweite Werkzeugsatz 10b zwei in Bandlaufrichtung B hintereinander angeordnete Reihen von Stempeln und Matrizen aufweist und der dritte Werkzeugsatz 10c drei in Bandlaufrichtung hintereinander angeordnete Reihen von Stempeln und Matrizen aufweist, sodass wahlweise mit einem einzige Pressenhub ein, zwei oder drei Verbindungspunktreihen gesetzt werden können, je nachdem welches Werkzeug 10a, b, c in der Presse 2 angeordnet ist. Ergänzend ist ein zusätzlicher Werkzeugsatz 10' vorgesehen, der als Stanzwerkzeug 10' ausgebildet ist, sodass sich die Presse auch einfach für eine Stanzverbindung umrüsten lässt. Es wird deutlich, dass z. B. für unterschiedliche Banddicken bzw. Banddickenbereiche verschiedene Werkzeugsätze eingesetzt werden können, wobei die einzelnen Werkzeugsätze 10a, b, c in der Regel unterschiedliche Punktdurchmesser bzw. Stempeldurchmesser aufweisen. Für dünne Bänder werden in der Regel kleine Punktdurchmesser verwendet, wobei dann verhältnismäßig viele Verbindungspunkte gesetzt werden. Für dicke Bänder werden große Punktdurchmesser verwendet, wobei dann in der Regel weniger Punkte gesetzt werden.

Dabei ist erkennbar, dass Oberwerkzeug 6 und Unterwerkzeug 7 unter Bildung des Werkzeugsatzes 10a, b, c über Führungen 13 miteinander verbunden sind. Im Ausführungsbeispiel handelt es sich um Führungssäulen 13, die gewährleisten, dass Oberwerkzeug 6 und Unterwerkzeug 7 mit Stempeln und Matrizen einwandfrei in der gewünschten Position zusammengefahren werden. Dabei weist jeder Werkzeugsatz insgesamt vier an den Ecken angeordnete Führungssäulen 13 auf. Dieses gilt gleichermaßen für die Ausführungsform nach Fig. 1 und 2 wie für die Ausführungsform nach Fig. 3 und 4.

Während die Werkzeugsätze 10a, b, c bzw. 10' bei der Ausführungsform nach Fig. 1 und 2 quer zur Bandlaufrichtung B ausgewechselt werden, zeigen die Fig. 3 bis 5 eine zweite Ausführungsform, bei welcher die Werkzeugsätze 10a, b, c bzw. 10' entlang der Bandlaufrichtung B zum Austausch verfahren werden. Die einzelnen Werkzeugsätze sind wiederum in Bandlaufrichtung B hintereinander angeordnet, diesmal jedoch nicht seitlich versetzt zur Verbindungspresse 2, sondern entlang der Bandlaufrichtung versetzt zur Verbindungspresse 2. Dennoch wird der Durchlauf des Metallbandes nicht gestört, da die Oberwerkzeuge 6 stets oberhalb des Metallbandes bzw. der Bandebene E und die Unterwerkzeuge 7 stets unterhalb des Metallbandes angeordnet sind und da die Führungssäulen 13 stets außerhalb des Bandbereiches angeordnet sind. Bei dieser Ausführungsform lässt sich der Werkzeugsatz auch dann auswechseln, wenn sich das Band in der Maschine befindet. Fig. 4 zeigt eine Ansicht, bei der beispielhaft das Stanzwerkzeug 10' in der Maschine angeordnet ist.

Um die Werkzeugsätze 10a, b, c, 10' austauschen zu können, sind in der Regel Wechselantriebe vorgesehen, z. B. hydraulische Antriebe, die in den Figuren nicht im Detail dargestellt sind.

Die in den Fig. 2 und 5 angedeuteten Werkzeuge zeigen, dass mit der erfindungsgemäßen Vorrichtung zeitgleich eine Vielzahl quer zur Bandlaufrichtung B beabstandete Verbindungspunkte unter Bildung zumindest einer sich über die Bandbreite oder nahezu die Bandbreite erstreckenden Verbindungspunktreihe erzeugt werden können. Je nachdem, welches der Werkzeuge verwendet wird, können zeitgleich auch mehrere in Bandlaufrichtung hintereinander angeordnete Verbindungspunktreihen erzeugt werden. Damit besteht die Möglichkeit, die gesamte Bandverbindung auch bei mehreren Verbindungspunktreihen mit einem einzigen Pressenhub zu erzeugen. Die Verbindungspresse stellt mit den Hydraulikzylindern 11 ausreichend Presskräfte zur Verfügung.

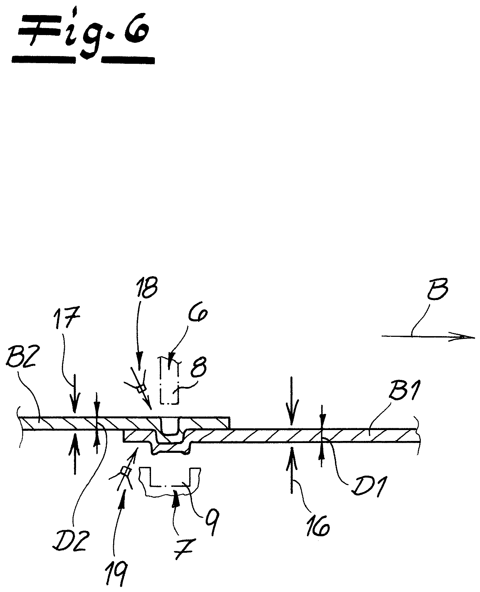

Das Prinzip der erfindungsgemäßen Clinchverbindung ist beispielhaft und vereinfacht in Fig. 6 dargestellt. Dabei sind das Bandende des ersten Metallbandes B1 und der Bandanfang des zweiten Metallbandes B2 und die Überlappung gezeigt, in deren Bereich mit dem Clinchwerkzeug 6, 7 die Verbindungspunkte durch Clinchen gesetzt werden. Dabei ist eine Clinchverbindung ohne Schneidanteil gezeigt. In Fig. 6 ist erkennbar, dass mit einer ersten Dickenmessvorrichtung 16 die Dicke D1 des Bandendes des ersten Metallbandes B1 und mit einer zweiten Dickenmessvorrichtung 17 die Dicke D2 des Bandanfangs des zweiten Metallbandes B2 gemessen werden, und zwar vor dem Verbinden der Bänder. Diese Dickenmessvorrichtungen 16, 17 können z. B. als optische Dickenmessvorrichtungen, z. B. mittels Laserstrahlung ausgebildet sein. Mit Hilfe dieser Dickenmessvorrichtungen 16, 17 besteht dann die Möglichkeit, den Fügeprozess in Abhängigkeit von der gemessenen Dicke bzw. von den gemessenen Dicken D1, D2 zu steuern und zu regeln, und zwar mit einer nicht dargestellten Steuer- und/oder Regelvorrichtung. In dem dargestellten Ausführungsbeispiel sind die Dickenmessvorrichtungen in unmittelbarer Nähe der Fügewerkzeuge angeordnet, sie können in die Fügevorrichtung integriert sein. Die Erfindung umfasst aber auch Ausführungsformen, bei denen die Dickenmessvorrichtungen an anderer Position innerhalb der Bandbehandlungsanlage angeordnet sind, so kann z. B. eine Dickenmessvorrichtung unmittelbar hinter einem Abwickelhaspel angeordnet sein, um dort die Dicke des Bandanfangs zu messen, wobei das entsprechende Signal bzw. der entsprechende Wert dann im Zuge der Bandverbindung verarbeitet werden kann.

Es besteht im Übrigen die Möglichkeit, die Bänder mit Beölungsvorrichtungen 18, 19 zu beölen. Dabei ist in dem dargestellten Ausführungsbeispiel vorgesehen, dass im Bereich der Überlappung lediglich die obere Oberfläche des oben liegenden Metallbandes B2 und die untere Oberfläche des unten liegenden Metallbandes B1 beölt werden. Optional und ergänzend besteht die Möglichkeit, die entsprechenden Werkzeugflächen zu beölen.

Die in Fig. 6 dargestellten Optionen können einzeln oder in Kombination eingesetzt werden, z. B. bei einer Vorrichtung nach Fig. 1 bis 5, alternativ aber auch bei anders ausgestalteten Vorrichtungen.

## Patentansprüche

1. Verfahren zum Verbinden eines Bandendes eines ersten Metallbandes (B1) mit dem Bandanfang eines zweiten Metallbandes (B2) in einer Bandbehandlungsanlage, wobei das Bandende und der Bandanfang unter Bildung einer Überlappung übereinander positioniert und im Bereich der Überlappung an mehreren Verbindungspunkten mittels Durchsetzfügen ohne Durchtrennung miteinander verbunden werden, **dadurch gekennzeichnet,**
**dass** die Dicke (D1) des Bandendes des ersten Metallbandes (B1) und die Dicke (D2) des Bandanfangs des zweiten Metallbandes (B2) innerhalb der Bandbehandlungsanlage vor dem Verbinden gemessen werden und dass der Durchsetz-Fügeprozess in Abhängigkeit von den vor dem Verbinden gemessenen Dicken gesteuert oder geregelt wird,
wobei die Eintauchtiefe des Stempels bzw. der Stempel des Durchsetz-Fügewerkzeuges in Abhängigkeit von den vor dem Verbinden gemessenen Dicken (D1, D2) gesteuert oder geregelt wird.

2. Verfahren nach Anspruch 1, **dadurch gekennzeichnet, dass** der Bandanfang und das Bandende und/oder das Durchsetzfügewerkzeug derart positioniert werden, dass kein Stempel des Fügewerkzeuges eine der Bandkanten trifft und/oder dass vor oder nach dem Verbinden der Bänder (B1, B2) im Bereich einer oder beider Bandkanten eine oder mehrere Seitenstanzungen eingebracht werden.

3. Verfahren nach Anspruch 2, **dadurch gekennzeichnet, dass** die Seitenstanzungen vor dem Verbinden der Bänder (B1, B1) mit der Maßgabe eingebracht werden, dass eine Abhängigkeit von der Werkzeuggeometrie und der Bandbreite und Bandposition ein Auftreffen eines Werkzeugstempels auf eine Bandkante verhindert wird.

4. Verfahren nach Anspruch 2, **dadurch gekennzeichnet, dass** die Seitenstanzungen nach dem Verbinden der Bänder (B1, B2) mit der Maßgabe eingebracht werden, dass keiner der Fügepunkte durch die Seitenstanzungen angeschnitten wird.

5. Verfahren nach einem der Ansprüche 1 bis 4, **dadurch gekennzeichnet, dass** im Bereich der Überlappung lediglich die obere Oberfläche des oben liegenden Metallbandes und die untere Oberfläche des unten liegenden Metallbandes beölt werden.

6. Verfahren nach einem der Ansprüche 1 bis 5, **dadurch gekennzeichnet, dass** für die Bandverbindung zumindest 30 Verbindungspunkte, vorzugsweise zumindest 50 Verbindungspunkte pro Meter Bandbreite mittels Durchsetzfügen gesetzt werden.

7. Bandbehandlungsanlage mit einer Vorrichtung zum Verbinden eines Bandendes eines ersten Metallbandes (B1) mit dem Bandanfang eines zweiten Metallbandes (B2), mit einer Verbindungspresse (2) für das Durchsetzfügen , **gekennzeichnet durch** eine oder mehrere Dickenmessvorrichtungen (16, 17), mit denen die Dicke (D1) des Bandendes des ersten Metallbandes (B1) und die Dicke (D2) des Bandanfangs des zweiten Metallbandes (B2) messbar ist und mit einer Steuer- und/oder Regelvorrichtung, mit welcher der Durchsetz-Fügeprozess in Abhängigkeit von den vor dem Verbinden gemessenen Dicken (D1, D2) steuerbar oder regelbar ist.

8. Vorrichtung nach Anspruch 7, mit zumindest einer Stanzvorrichtung, mit der eine oder mehrere Seitenstanzungen vor und/oder nach dem Verbinden der Bänder erzeugbar sind.

9. Vorrichtung nach Anspruch 7 oder 8, mit zumindest einer Beölungsvorrichtung (18, 19), mit welcher das Metallband oder die Metallbänder und/oder die Werkzeuge für das Durchsetzfügen beölbar sind.

## Claims

1. A method for connecting an end of a first metal strip (B1) to the beginning of a second metal strip (B2) in a strip treatment installation, the end of the strip and the beginning of the strip being positioned one on top of the other to form an overlap and being connected to each other at multiple connecting points in the region of the overlap, by means of clinching without cutting, **characterised in that**
the thickness (D1) of the end of the first metal strip (B1) and the thickness (D2) of the beginning of the second metal strip (B2) are measured within the strip treatment installation before connection, and the clinching process is controlled or regulated depending on the thicknesses measured before connection,
wherein the penetration depth of the punch(es) of the clinching tool is controlled or regulated depending on the thicknesses (D1, D2) measured before connection.

2. The method according to Claim 1, **characterised in that** the strip beginning and the strip end and/or the clinching tool are positioned such that no punch of the joining tool hits any of the strip edges, and/or one or more side stamps are made in the region of one or both strip edges before or after the strips (B1, B2) are connected.

3. The method according to Claim 2, **characterised in that** the side stamps are made before the strips (B1, B1) are connected, with the proviso that a tool punch is prevented from hitting a strip edge depending on the tool geometry and the strip width and the strip position.

4. The method according to Claim 2, **characterised in that** the side stamps are made after the strips (B1, B2) are connected, with the proviso that none of the joining points is cut by the side stamps.

5. The method according to any one of Claims 1 to 4, **characterised in that** only the upper surface of the metal strip on top and the lower surface of the metal strip on the bottom are oiled in the region of the overlap.

6. The method according to any one of Claims 1 to 5, **characterised in that** at least 30 connecting points, preferably at least 50 connecting points per metre of strip width are made by clinching for the strip connection.

7. A strip treatment installation having a device for connecting an end of a first metal strip (B1) to the beginning of a second metal strip (B2), having a connecting press (2) for clinching, **characterised by** one or more thickness measurement devices (16, 17), with which the thickness (D1) of the end of the first metal strip (B1) and the thickness (D2) of the beginning of the second metal strip (B2) can be measured, and a control and/or regulation device, with which the clinching process can be controlled or regulated depending on the thicknesses (D1, D2) measured before connection.

8. The device according to Claim 7, having at least one stamping device, with which one or more side stamps can be produced before and/or after the strips are connected.

9. The device according to Claim 7 or 8, having at least one oiling device (18, 19), with which the metal strip (s) and/or the tools for the clinching can be oiled.

## Revendications

1. Procédé, destiné à assembler une fin de bande d'une première bande métallique (B1) avec le début de bande d'une deuxième bande métallique (B2) dans une installation de traitement de bandes, la fin de bande et le début de bande étant positionnées l'une sur l'autre en créant un chevauchement et assemblées l'une à l'autre sur plusieurs points d'assemblage dans la zone du chevauchement par assemblage par interpénétration sans sectionnement, **caractérisé**
**en ce que** l'épaisseur (D1) de la fin de bande de la première bande métallique (B1) et l'épaisseur (D2) du début de bande de la deuxième bande métallique (B2) sont mesurées avant l'assemblage au sein de l'installation de traitement de bandes et **en ce que** le processus d'assemblage par interpénétration est commandé ou réglé en fonction des épaisseurs mesurées avant l'assemblage,
la profondeur de plongée du poinçon ou des poinçons de l'outil d'assemblage par interpénétration est commandée ou réglée en fonction des épaisseurs (D1, D2) mesurées avant l'assemblage.

2. Procédé selon la revendication 1, **caractérisé en ce que** le début de bande et la fin de bande et/ou l'outil d'assemblage par interpénétration sont positionnés de telle sorte qu'aucun poinçon de l'outil d'assemblage ne touche l'une des arêtes de bande et/ou **en ce qu'**avant l'assemblage des bandes (B1, B2), dans la zone d'une ou des deux arêtes de bande soient ménagés un ou plusieurs poinçonnages latéraux.

3. Procédé selon la revendication 2, **caractérisé en ce qu'**avant l'assemblage des bandes (B1, B1), les poinçonnages latéraux sont ménagés avec le critère qu'une dépendance entre la géométrie de l'outil et la largeur de bande et la position de bande empêche un impact d'un poinçon d'outil sur une arête de bande.

4. Procédé selon la revendication 2, **caractérisé en ce qu'**avant l'assemblage des bandes (B1, B1), les poinçonnages latéraux sont ménagés avec le critère qu'aucun des points d'assemblage ne soit coupé par les poinçonnages latéraux.

5. Procédé selon l'une quelconque des revendications 1 à 4, **caractérisé en ce que** dans la zone du chevauchement, seule la surface supérieure de la bande métallique située sur le dessus et la surface inférieure de la bande métallique située sur le dessous soient huilées.

6. Procédé selon l'une quelconque des revendications 1 à 5, **caractérisé en ce que** pour l'assemblage des bandes sont placés par assemblage par interpénétration au moins 30 points d'assemblage, de préférence au moins 50 points d'assemblage par mètre de largeur de bande.

7. Installation de traitement de bandes, pourvue d'un dispositif, destiné à assembler une fin de bande d'une première bande métallique (B1) avec le début de bande d'une deuxième bande métallique (B2), pourvue d'une presse d'assemblage (2) pour l'assemblage par interpénétration, **caractérisée par** plusieurs dispositifs de mesure de l'épaisseur (16, 17), à l'aide desquels peuvent être mesurées l'épaisseur (D1) de la fin de bande de la première bande métallique (B1) et l'épaisseur (D2) du début de bande de la deuxième bande métallique (B2) et pourvue d'un dispositif de commande et/ou de réglage, à l'aide duquel le processus d'assemblage par interpénétration peut être commandé ou réglé en fonction des épaisseurs (D1, D2) mesurées avant l'assemblage.

8. Procédé selon la revendication 7, pourvu d'au moins un dispositif de poinçonnage, à l'aide duquel un ou plusieurs poinçonnages latéraux peuvent être créés avant et/ou après l'assemblage des bandes.

9. Procédé selon la revendication 7 ou 8, pourvu d'au moins un dispositif d'huilage (18, 19), à l'aide duquel la bande métallique ou les bandes métalliques et/ou les outils pour l'assemblage par interpénétration peuvent être huilés.
